# EUROPÄISCHE PATENTSCHRIFT

(11) **EP 2 628 650 B1**
(45) Veröffentlichungstag und Bekanntmachung des Hinweises auf die Patenterteilung: **29.07.2015**
(21) Anmeldenummer: 13151231.1
(22) Anmeldetag: 15.01.2013
(51) Int. Cl.: B61D 33/00, B60N 2/015, H01R 13/62

(54) **Sitzbefestigung für einen Personensitz in einem Schienenfahrzeug**
Seat attachment for a passenger seat in a rail vehicle
Fixation de siège pour un siège de personnes dans un véhicule sur rail

(30) Priorität: 14.02.2012 DE 102012202172
(43) Veröffentlichungstag der Anmeldung: 21.08.2013
(73) Patentinhaber: Siemens Aktiengesellschaft, 80333 München (DE)
(72) Erfinder: Klein, Ulrich, 40670 Meerbusch (DE); Paffrath, Klaus, 40668 Meerbusch (DE)

(56) Entgegenhaltungen:
- WO-A1-2004/021836
- DE-A1- 10 257 272
- US-A1- 2007 114 846

## Beschreibung

Die vorliegende Erfindung betrifft eine Sitzbefestigung, welche einen Sitz, eine Sitzschiene und Mittel zur Befestigung des Sitzes an der Sitzschiene umfasst.

Derartige Sitzbefestigungen sind aus dem Stand der Technik bereits bekannt, wie z.B. aus der DE-A-102 57 272. Die Sitze werden beispielsweise mittels Verschraubungen an Aluminiumprofilen befestigt, welche unter Fußbodenplatten gelagert sind. Dazu sind Bohrungen in den Fußbodenplatten und den Aluminiumprofilen vorgesehen. Die Bohrungen ermöglichen das Eindringen von Schmutz und Flüssigkeit, was zur Korrosion führen kann. Eine Änderung des Sitzteilers ist darüber hinaus nur mit erheblichem Aufwand verbunden, insbesondere dadurch, dass gegebenenfalls neue Bohrungen vorzusehen sind.

Der Erfindung liegt daher die Aufgabe zugrunde, eine Sitzbefestigung vorzuschlagen, welche eine einfache und kostengünstige Änderung des Sitzteilers ermöglicht.

Gelöst wird die Aufgabe durch den Gegenstand des unabhängigen Patentanspruchs 1. Weiterbildungen der Erfindung finden sich in den Merkmalen der abhängigen Patentansprüchen wieder.

Eine erfindungsgemäße Vorrichtung zur Befestigung eines Sitzes umfasst einen Sitz, insbesondere einen Personensitz eines Schienenfahrzeugs, eine Sitzschiene und Mittel zur Befestigung des Sitzes an der Sitzschiene, wobei die Mittel zur Befestigung einen Magneten und ein magnetisierbares Profil aufweisen. Die Sitzschiene bildet beispielsweise das magnetisierbare Profil.

Gemäß einer ersten Weiterbildung der Erfindung ist das magnetisierbare Profil als ein zum Magneten komplementäres magnetisches Joch ausgebildet. Wird das magnetisierbare Profil von der Sitzschiene gebildet, wirkt diese als magnetisches Joch, welches komplementär zum Magneten ausgebildet ist, zum Schließen eines magnetischen Kreises.

Gemäß einer weiteren Weiterbildung umfasst die erfindungsgemäße Vorrichtung fürderhin einer Verschiebung des Sitzes längs der Sitzschiene entgegenwirkende Mittel.

Eine weitere Weiterbildung der erfindungsgemäßen Vorrichtung sieht vor, dass die der Verschiebung des Sitzes längs der Sitzschiene entgegenwirkenden Mittel einen Haftbelag umfassen, in welchen ein Halteelement eindrückbar ist. Der Magnet kann dabei beispielsweise als Halteelement fungieren. Er ist dabei insbesondere am Sitz angeordnet, beispielsweise an einem Sitzfuß. Die Sitzschiene umfasst dann das magnetisierbare Profil, an welcher gegebenenfalls auch der Haftbelag angeordnet ist.

Gemäß einer weiteren Weiterbildung der erfindungsgemäßen Lösung weist die Sitzschiene eine Nut, in welcher der Haftbelag angeordnet ist. Die Nut ist beispielsweise mit dem Haftbelag ausgefüllt.

Eine weitere Weiterbildung der erfindungsgemäßen Vorrichtung sieht vor, dass der Sitz den Magneten und das Halteelement umfasst, wobei dass das Halteelement des Sitzes in einem montierten Zustand des Sitzes an der Sitzschiene zumindest in einer vorgegebenen Eindrucktiefe in den Haftbelag eingedrückt ist, wobei der Sitz, insbesondere der Magnet und das Halteelement, und die Sitzschiene so komplementär zueinander ausgestaltet sind, dass im montierten Zustand des Sitzes an der Sitzschiene ein magnetischer Kreis zwischen Sitz und Sitzschiene geschlossen ist.

Weitergebildet umfasst die Erfindung eine Lösevorrichtung zum Lösen des Sitzes von der Sitzschiene, geeignet, um eine Kraft entgegen der Richtung des Eindrucks des Sitzes in den Haftbelag auf den Sitz aufzubringen. Diese ist insbesondere am Sitz angeordnet. Beispielsweise ist sie gebildet durch eine durchgehende Gewindebohrung am Sitz, in welche eine Schraube eindrehbar ist und welche so ausgerichtet ist, dass die Schraube im eingedrehten Zustand und im montierten Zustand des Sitzes mit ihrer Spitze an der Sitzschiene anliegt, um eine Kraft entgegen der Richtung des Eindrucks des Sitzes in den Haftbelag auf den Sitz aufzubringen.

Ein erfindungsgemäßes Schienenfahrzeug umfasst daher einen Sitz, welcher mittels einer erfindungsgemäßen Vorrichtung zur Befestigung des Sitzes am Schienenfahrzeug befestigt ist. Insbesondere ist die Sitzschiene dabei an einem Fußboden oder in einer Wand des Schienenfahrzeugs befestigt. Insbesondere ist die Sitzschiene im Fußboden oder in der Wand des Schienenfahrzeugsangeordnet. Ist der Sitz am Fußboden erfindungsgemäß befestigt, kann er mit einer konventionellen Verbindung mit der Wand befestigt sein, welche geeignet ist, eine Kraft vorgegebener Größe in Längsrichtung der Sitzschiene aufzunehmen..

Gemäß einer Weiterbildung des erfindungsgemäßen Schienenfahrzeugs, ist die Sitzschiene so ausgestaltet und mit dem Schienenfahrzeug verbunden, dass eine freie Oberfläche des Haftbelags eine ebene Oberfläche mit dem Fußboden oder der Wand des Schienenfahrzeugs bildet.

Die Farbe des Haftbelags unterscheidet sich dabei in vorteilhafter Weise von der Farbe des Fußbodens, zur Orientierung bei der Montage des Sitzes.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt eine erfindungsgemäße Vorrichtung in einem nichtmontierten Zustand in einem Querschnitt.
- Fig. 2: zeigt die erfindungsgemäße Vorrichtung aus Fig. 1 in einem montierten Zustand in einem Längsschnitt durch einen Sitzfuß des Sitzes.

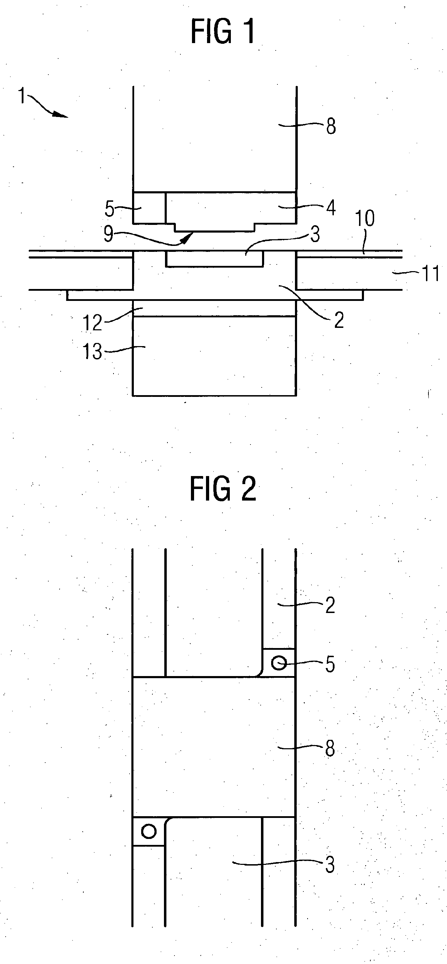

In Fig. 1 und Fig. 2 dargestellt ist eine Sitzschiene 2 zur Positionierung eines Sitzes 1, hier in Gestalt eines Sitzfußes 8 veranschaulicht, auf welche Sitzschiene 2 ein Haftbelag 3 aufgebracht ist. In diesem Ausführungsbeispiel weist die Sitzschiene 2 eine Nut in Längsrichtung der Sitzschiene 2 auf. Die Nut ist hier mit dem Haftbelag 3 ausgefüllt. Der Haftbelag 3 ist, insbesondere elastisch, soweit verformbar, dass ein Halteelement in den Haftbelag 3 eindrückbar ist, zumindest bis zu einer vorgegebenen Eindrucktiefe. Der Haftbelag 3 umfasst dazu beispielsweise ein Elastomer. Das Halteelement ist dann insbesondere am Sitz 1, insbesondere am Sitzfuß 8 befestigt.

Die Sitzschiene 2 umfasst einen ferro- oder ferrimagnetischen Werkstoff. Sie bildet daher ein magnetisierbares Profil. Die Sitzschiene 2 ist beispielsweise aus einem ferromagnetischen Werkstoff, insbesondere aus Stahl, hergestellt.

Der Sitz 1 weist einen Magneten 4 zur Erzeugung eines Magnetfelds auf. Dabei umfasst der Magnet 4 beispielsweise das Haltelement, welches im skizzierten Ausführungsbeispiel von ihm gebildet wird. Hier ist der Magnet 4 am Sitzfuß 8 angeordnet und bildet dessen Stirnseite.

In einem hier nicht näher präsentierten, montierten Zustand des Sitzes 1 an der Sitzschiene 2 ist das Halteelement, hier der Magnet 4, zumindest in einer vorgegebenen Eindrucktiefe eingedrückt, wobei der Sitz 1, hier insbesondere der Magnet 4, und die Sitzschiene 2 so komplementär zueinander ausgestaltet sind, dass ein magnetischer Kreis, gegebenenfalls auch mit Spalt, zwischen Sitz 1, insbesondere dem Magneten 4, und Sitzschiene 2 geschlossen ist.

Während der Montage des Sitzes 1 wird dieser auf den Haftbelag 3 aufgesetzt, so dass er diesen mit einer Stirnfläche 9 berührt. Diese Stirnfläche 9 weist gemäß einer Variante der Erfindung einen Flächeninhalt von 1500 *mm²* bis 2500 *mm²* auf. Anschließend wird eine Kraft auf den Sitz 1 in Richtung der Sitzschiene 2 aufgebracht, wodurch der Sitz 1, insbesondere das Halteelement bzw. hier der Magnet 4 am Sitzfuß 8, in den Haftbelag 3 eingedrückt wird. Diese Kraft beträgt beispielsweise ca. 500 N. Ist die vorgegebene Eindrucktiefe erreicht, schließt sich der magnetische Kreis und der Sitz 1 wird durch die Kraft des Magnetfelds in Position relativ zur Sitzschiene 2 gehalten. Der Magnet entwickelt dann beispielsweise eine Anpresskraft von größer als 550 N.

Der magnetische Kreis kann dabei einen Spalt aufweisen, in welchem Luft oder Werkstoff des Haftbelags angeordnet ist. Ein Spalt entsteht beispielsweise durch einen Abstand zwischen dem Sitz 1, hier insbesondere zwischen dem Magneten 4 am Sitzfuß 8, und der Sitzschiene 2, wenn Sitz 1 und Sitzschiene 2 nicht zueinander fluchtend ausgestaltet sind. Die Summe der Spalte ist bei der Auslegung des Magneten zu berücksichtigen. Es ist also nicht zwingend erforderlich, dass die Nutflanken der Sitzschiene 2 den Sitz 1 im montierten Zustand berühren. Dann ist der Sitz 1 jedoch axial in der Schiene 2 geführt.

Gemäß einer Ausgestaltung beträgt die vorgegebene Eindrucktiefe 1 mm bis 3 mm, so dass der magnetische Kreis geschlossen ist.

In dem dargestellten Querschnitt weist die Sitzschiene 2 ein, hier nach oben offenes, C-Profil auf, welches das Joch des magnetischen Kreises bildet und zu welchem der Sitz 1, hier der Magnet 4 am Sitzfuß 8, nun so komplementär ausgestaltet ist, dass er bei der vorgegebenen Eindrucktiefe, das magnetische Joch und damit den magnetischen Kreis schließt.

Die Wechselwirkung zwischen dem vom Magneten 4 erzeugten Magnetfeld und der Sitzschiene 2 bringt dann eine Kraft auf den Sitz 1 und die Sitzschiene 2 auf, die derart ausgestaltet ist, dass der Sitz 1 an seiner Position an, bzw. hier in diesem Beispiel, in der Sitzschiene 2 gehalten wird. Dies sowohl entgegen des Widerstands des Haftbelags 3, als auch entgegen äußeren, auf den Sitz 1 einwirkenden, mechanischen Kräften bis zu einem vorgegebenen Maß.

Der Haftbelag 3 dient dabei als Sicherung gegen Verschieben des Sitzes 1 axial zur Sitzschiene 2. Einerseits durch eine erhebliche Haftreibung zwischen Sitz 1 und Sitzschiene 2, der Reibungskoeffizient µ zwischen Sitz und Haftbelag ist gemäß einer weiteren Weiterbildung größer als 0,8, er liegt beispielsweise in einem Intervall zwischen 0,8 und 1,2. Andererseits würde zu einer Verschiebung des Sitzes 1 entlang der Sitzschiene 2 weitere Energie zur Deformation des Haftbelags benötigt werden.

Alternativ zum beschriebenen C-Profil der Sitzschiene, könnte sie beispielsweise auch als Vierkant ausgestaltet sein, und der Sitz weist eine entsprechende Nut auf, wobei der magnetische Kreis dadurch geschlossen wird, dass die Sitzschiene in die Nut des Sitzes eindringt.

Des Weiteren sieht die erfindungsgemäße Vorrichtung eine Lösevorrichtung vor, beispielsweise ein Getriebe, zum Lösen des Sitzes 1 von der Sitzschiene 2. Hier weist der Sitz 1 eine durchgehende Gewindebohrung 5 auf, in welche eine, insbesondere nichtmagnetische oder nichtmagnetisierbare, Schraube, beispielsweise aus Aluminium, eindrehbar ist und welche Gewindebohrung 5 so ausgerichtet ist, dass die Schraube im eingedrehten Zustand und im montierten Zustand des Sitzes 1 mit ihrer Spitze, welche eine zum Schraubenkopf gegenüberliegende Seite der Schraube bildet, an der Sitzschiene 2 anliegt, insbesondere steht die Gewindebohrung im Sitz im montierten Zustand des Sitzes 1 senkrecht auf der Längsachse der Sitzschiene 2, um eine Kraft, insbesondere durch die Umwandlung des Drehmoments auf die Schraube in eine Axialkraft, axial entlang der Schraube, auf den Sitz 1 entgegen der Richtung des Eindrucks des Sitzes 1 in den Haftbelag 3 aufzubringen. Mittels der Schraube ist Sitz 1 somit von der Sitzschiene 2 wieder weg zu drücken. Der Kraftfluss verläuft dabei vom der Sitzschiene 2 über die Schraube zum Sitz 1. Die genannte Kraft ist geeignet, die Kraft des Magnetfelds zwischen Sitz 1 und Sitzschiene 2 zu überwinden und den magnetischen Kreis zu öffnen. Bei der Demontage wird dabei die Eindrucktiefe des Sitzes 1 in den Haftbelag 3 so verringert, dass der magnetische Kreis geöffnet ist. Danach lässt sich der Sitz 1 von der Sitzschiene 2 abheben.

Dadurch ist es einfach und kostengünstig möglich, den Sitzteiler zerstörungsfrei zu ändern. Ein weiterer Vorteil der Erfindung besteht darin, dass das Eindringen von Flüssigkeit und Schmutz in die Sitzschiene und gegebenenfalls in einen die Sitzschiene umgebenden Fußboden verhindert und damit die Gefahr von Korrosion verringert wird.

Beispielsweise weist der Haftbelag eine Shore-A-Härte [shA] nach DIN 53505 in Richtung des Eindrucks des Sitzes in den Haftbelag von 50 auf. Die Dicke des Haftbelags beträgt beispielsweise 20 mm.

Die angegebene Richtung des Eindrucks des Sitzes in den Haftbelag entspricht im montierten Zustand des Sitzes einer Richtung senkrecht zur Längsachse der Sitzschiene und senkrecht zum magnetischen Fluss durch den Sitz.

Ein Ausführungsbeispiel der Erfindung sieht vor, dass der Magnet 4 geeignet ist, eine magnetische Flussdichte von zumindest 1 T [Tesla] zu erzeugen. Insbesondere beträgt die vom Magneten 4 erzeugte magnetische Flussdichte mindestens 1,2 T, beispielsweise gar 1,5 T. Bei dem Magneten 4 handelt es sich insbesondere um einen Permanentmagneten.

Die angegebenen Materialkonstanten sind wie üblich, beispielsweise unter Normbedingungen, ermittelt worden.

Fürderhin umfasst das hier gezeichnete Ausführungsbeispiel der erfindungsgemäßen Vorrichtung einen Fußboden, in welchem die Sitzschiene 2 verankert ist.

Die Sitzschiene 2 ist hier so ausgestaltet und mit dem Schienenfahrzeug verbunden, dass eine freie Oberfläche 7 des Haftbelags 3 eine ebene Oberfläche mit der Oberfläche 6 eines Fußbodenbelags 10 des Fußbodens bildet. Die freie Oberfläche 7 des Haftbelags 3 wird im nichtmontierten Zustand des Sitzes 1 durch die Oberfläche des Haftbelags 3 gebildet, welche im montierten Zustand des Sitzes 1 vom Sitz 1 eingedrückt wird. Durch die Abwesenheit von Erhabenheiten oder Einbuchtungen im Fußboden, ist die Gefahr von Unfällen minimiert.

Der Fußboden besteht hier aus einem Fußbodenbelag 10 und einer Fußbodenplatte 11. Unter dem Fußboden, respektive unter der Sitzschiene 2 sind in diesem Ausführungsbeispiel noch zwei weitere Schichten aus Sylomer 12 und Lagerholz 13 angeordnet.

## Patentansprüche

1. Vorrichtung zur Befestigung eines Sitzes, umfassend einen Sitz (1), eine Sitzschiene (2) und Mittel zur Befestigung des Sitzes (1) an der Sitzschiene (2),
**dadurch gekennzeichnet, dass**
die Mittel zur Befestigung einen Magneten (4) und ein magnetisierbares Profil aufweisen.

2. Vorrichtung nach Anspruch 1,
**dadurch gekennzeichnet, dass**
das magnetisierbare Profil als ein zum Magneten (4) komplementäres magnetisches Joch ausgebildet ist.

3. Vorrichtung nach einem der Ansprüche 1 oder 2,
**dadurch gekennzeichnet, dass**
sie einer Verschiebung des Sitzes (1) längs der Sitzschiene (2) entgegenwirkende Mittel (3, 4) umfasst.

4. Vorrichtung nach Anspruch 3,
**dadurch gekennzeichnet, dass**
die der Verschiebung des Sitzes (1) längs der Sitzschiene (2) entgegenwirkenden Mittel einen Haftbelag (3) umfassen, in welchen ein Halteelement eindrückbar ist.

5. Vorrichtung nach Anspruch 4,
**dadurch gekennzeichnet, dass**
die Sitzschiene (2) eine Nut aufweist, in welcher der Haftbelag (3) angeordnet ist.

6. Vorrichtung nach einem der Ansprüche 4 oder 5,
**dadurch gekennzeichnet, dass**
der Sitz (1) einen Sitzfuß (8) umfasst, an welchem der Magnet (4) und das Haltelement angeordnet sind und, dass die Sitzschiene (2) das magnetisierbare Profil umfasst, an welchem der Haftbelag (3) angeordnet ist.

7. Vorrichtung nach einem der Ansprüche 1 bis 6,
**dadurch gekennzeichnet, dass**
sie eine Lösevorrichtung zum Lösen des Sitzes (1) von der Sitzschiene (2) umfasst, welche Lösevorrichtung geeignet ist, eine Kraft auf den Sitz (1) gegen die Sitzschiene (2) wirkend aufzubringen.

8. Vorrichtung nach Anspruch 7,
**dadurch gekennzeichnet, dass**
der Sitz (1) eine durchgehende Gewindebohrung (5) aufweist, in welche eine Schraube eindrehbar ist und welche so ausgerichtet ist, dass die Schraube im eingedrehten Zustand mit ihrer Spitze an der Sitzschiene (2) anliegt, um eine Kraft auf den Sitz (1) gegen die Sitzschiene (2) wirkend aufzubringen.

9. Schienenfahrzeug mit einem Sitz, befestigt mittels einer Vorrichtung nach einem der Ansprüche 1 bis 8,
**dadurch gekennzeichnet, dass**
die Sitzschiene (2) in einem Fußboden des Schienenfahrzeugs befestigt ist.

10. Schienenfahrzeug nach Anspruch 9,
**dadurch gekennzeichnet, dass**
in einem nichtmontierten Zustand des Sitzes (1), der Haftbelags (3) eine ebene Oberfläche mit dem Fußboden bildet.

## Claims

1. Device for attaching a seat, comprising a seat (1), a seat rail (2) and means for attaching the seat (1) to the seat rail (2), **characterized in that**
the attachment means has a magnet (4) and a magnetisable profile.

2. Device according to Claim 1, **characterized in that** the magnetisable profile is designed as a magnetic yoke which is complementary to the magnet (4).

3. Device according to either of Claims 1 and 2, **characterized in that** said device comprises means (3, 4) counteracting a displacement of the seat (1) along the seat rail (2).

4. Device according to Claim 3, **characterized in that** the means counteracting the displacement of the seat (1) along the seat rail (2) comprise an adhesive lining (3) into which a retaining element can be pressed.

5. Device according to Claim 4, **characterized in that** the seat rail (2) has a groove in which the adhesive lining (3) is arranged.

6. Device according to either of Claims 4 and 5, **characterized in that** the seat (1) comprises a seat base (8) on which the magnet (4) and the retaining element are arranged, and **in that** the seat rail (2) comprises the magnetisable profile on which the adhesive lining (3) is arranged.

7. Device according to one of Claims 1 to 6, **characterized in that** the device comprises a release device for releasing the seat (1) from the seat rail (2), which release device is suitable for applying a force to the seat (1) in a manner acting against the seat rail (2).

8. Device according to Claim 7, **characterized in that** the seat (1) has a continuous threaded bore (5) into which a screw can be screwed and which is oriented in such a manner that, in the screwed-in state, the screw bears with the point thereof against the seat rail (2) in order to apply a force to the seat (1) in a manner acting against the seat rail (2).

9. Rail vehicle with a seat attached by means of a device according to one of Claims 1 to 8, **characterized in that** the seat rail (2) is attached in a floor of the rail vehicle.

10. Rail vehicle according to Claim 9, **characterized in that**, in a non-mounted state of the seat (1), the adhesive lining (3) forms a flat surface with the floor.

## Revendications

1. Dispositif de fixation d'un siège, comprenant un siège (1), un rail (2) de siège et des moyens de fixation du siège (1) au rail (2) de siège,
**caractérisé en ce que**
les moyens de fixation comportent un aimant (4) et un profilé pouvant être aimanté.

2. Dispositif suivant la revendication 1,
**caractérisé en ce que**
le profilé pouvant être aimanté est constitué sous la forme d'une culasse magnétique complémentaire de l'aimant (4).

3. Dispositif suivant l'une des revendications 1 ou 2,
**caractérisé en ce que**
il comprend des moyens (3, 4) s'opposant à un déplacement du siège (1) le long du rail (2) de siège.

4. Dispositif suivant la revendication 3,
**caractérisé en ce que**
les moyens s'opposant au déplacement du siège (1) le long du rail (2) de siège comprennent une couche (3) d'adhérence, dans laquelle peut être enfoncé un élément de retenue.

5. Dispositif suivant la revendication 4,
**caractérisé en ce que**
le rail (2) de siège à une rainure, dans laquelle est disposée la couche (3) d'adhérence.

6. Dispositif suivant l'une des revendications 4 ou 5, **caractérisé en ce que**
le siège (1) comprend un pied (8), sur lequel sont montés l'aimant (4) et l'élément de retenue et
**en ce que** le rail (2) de siège comprend le profilé pouvant être aimanté, sur lequel est disposée la couche (3) d'adhérence.

7. Dispositif suivant l'une des revendications 1 à 6,
**caractérisé en ce que**
il comprend un dispositif de détachement pour détacher le siège (1) du rail (2) de siège, lequel dispositif de détachement est propre à appliquer une force poussant le siège (1) sur le rail (2) de siège.

8. Dispositif suivant la revendication 7,
**caractérisé en ce que**
le siège (1) a un taraudage (5) traversant, dans lequel peut être vissée une vis et qui est dirigé de manière à ce que la vis, lorsqu'elle est vissée, s'applique par sa pointe au rail (2) de siège pour appliquer au siège (1) une force le poussant sur le rail (2) de siège.

9. Véhicule ferroviaire ayant un siège, fixé au moyen d'un dispositif suivant l'une des revendications 1 à 8,
**caractérisé en ce que**
le rail (2) de siège est fixé dans un plancher du véhicule ferroviaire.

10. Véhicule ferroviaire suivant la revendication 9,
**caractérisé en ce que**
lorsque le siège (1) n'est pas monté, la couche (3) d'adhérence forme une surface plane avec le plancher.
